# EUROPEAN PATENT APPLICATION

(11) **EP 4 502 971 A1**
(43) Date of publication of application: **05.02.2025**
(21) Application number: 24183784.8
(22) Date of filing: 21.06.2024
(51) Int. Cl.: G07C 9/00, B60L 1/00, G06F 1/26, H04W 52/02

(54) **SYSTEMS, APPARATUSES, METHODS, AND COMPUTER PROGRAM PRODUCTS FOR ACTIVATING OR DEACTIVATING A RADIO FREQUENCY IDENTIFICATION READER**

(30) Priority: 31.07.2023 IN 202311051293
(71) Applicant: Hand Held Products, Inc., Charlotte, NC 28202 (US)
(72) Inventor: VARUKUTTY, Abin Chiriyankandath, Charlotte 28202 (US); RAVILLA, Sridhar, Charlotte 28202 (US); PANDEY, Pankaj Kumar, Charlotte 28202 (US); BISWAS, Gourango Lal, Charlotte 28202 (US)
(74) Representative: Haseltine Lake Kempner LLP

(57) **Abstract**

Systems apparatuses, methods, and computer program products for activating or deactivating a radio frequency identification (RFID) reader are provided herein. For example, a system provided herein may include a plurality of switches. In some embodiments, each of the plurality of switches comprises an energy harvesting component and a switch controller. In some embodiments, each of the plurality of switches is configured to transmit a signal in response to being triggered. In some embodiments, the system may include a RFID trigger circuitry. In some embodiments, the RFID trigger circuitry is configured to receive one or more signals from one or more of the plurality of switches. In some embodiments, the RFID trigger circuitry is configured to activate or deactivate a RFID reader based at least in part on the one or more signals received from one or more of the plurality of switches.

## Description

### TECHNOLOGICAL FIELD

Embodiments of the present disclosure relate generally to systems, apparatuses, methods, and computer program products for activating or deactivating a radio frequency identification (RFID) reader.

### BACKGROUND

Applicant has identified many technical challenges and difficulties associated with systems, apparatuses, methods, and computer program products for activating or deactivating a radio frequency identification (RFID) reader. Through applied effort, ingenuity, and innovation, Applicant has solved problems related to systems, apparatuses, methods, and computer program products for activating or deactivating a RFID reader by developing solutions embodied in the present disclosure, which are described in detail below.

### BRIEF SUMMARY

Various embodiments described herein relate to systems, apparatuses, methods, and computer program products for activating or deactivating a radio frequency identification (RFID) reader.

In accordance with one aspect of the disclosure, a system is provided. In some embodiments, the system may include a plurality of switches. In some embodiments, each of the plurality of switches comprises an energy harvesting component and a switch controller. In some embodiments, each of the plurality of switches is configured to transmit a signal in response to being triggered. In some embodiments, a first switch of the plurality of switches is fixed to an ignition switch of a vehicle, a second switch of the plurality of switches is fixed to a brake pedal of the vehicle, and a third switch of the plurality of switches is fixed to an accelerator pedal of the vehicle. In some embodiments, the system may include radio frequency identification (RFID) trigger circuitry. In some embodiments, the RFID trigger circuitry is configured to receive one or more signals from one or more of the plurality of switches. In some embodiments, the RFID trigger circuitry is configured to activate or deactivate a RFID reader based at least in part on the one or more signals received from one or more of the plurality of switches.

In some embodiments, the vehicle is an electric vehicle.

In some embodiments, the RFID trigger circuitry comprises a receiving component and a RFID trigger circuitry controller.

In some embodiments, the receiving component is configured to receive one or more signals from one or more of the plurality of switches. In some embodiments, in response to receiving one or more signals from the plurality of switches, the receiving component is configured to wake up the RFID trigger circuitry controller from a power saving mode.

In some embodiments, in response to receiving a signal from the first switch and the second switch, the RFID trigger circuitry is configured to activate the RFID reader by causing the RFID reader to enter an idle mode.

In some embodiments, in response to receiving a signal from the first switch, the second switch, and the third switch, the RFID trigger circuitry is configured to activate the RFID reader by causing the RFID reader to enter an active mode.

In some embodiments, in response to receiving a signal from the first switch and the second switch, the RFID trigger circuitry is configured to deactivate the RFID reader by causing the RFID reader to enter a power saving mode.

In some embodiments, in response to receiving a signal from the first switch, the second switch, and the third switch, the RFID trigger circuitry is configured to deactivate the RFID reader by causing the RFID reader to enter a power saving mode.

In some embodiments, each of the plurality of switches is configured to transmit a signal in response to being triggered for a first time period.

In some embodiments, each energy harvesting component comprises a piezoelectric sensor.

In accordance with another aspect of the disclosure a method is provided. In some embodiments, the method may include receiving one or more signals from one or more of a plurality of switches. In some embodiments, each of the plurality of switches comprises an energy harvesting component and a switch controller. In some embodiments, each of the plurality of switches is configured to transmit a signal in response to being triggered. In some embodiments, a first switch of the plurality of switches is fixed to an ignition switch of a vehicle, a second switch of the plurality of switches is fixed to a brake pedal of the vehicle, and a third switch of the plurality of switches is fixed to an accelerator pedal of the vehicle. In some embodiments, the method may include causing a radio frequency identification (RFID) reader to be activated or deactivated based at least in part on the one or more signals received from one or more of the plurality of switches.

In some embodiments, the vehicle is an electric vehicle.

In some embodiments, the method may include in response to receiving a signal from the first switch and the second switch, activating the RFID reader by causing the RFID reader to enter an idle mode.

In some embodiments, the method may include in response to receiving a signal from the first switch, the second switch, and the third switch, activating the RFID reader by causing the RFID reader to enter an active mode.

In some embodiments, the method may include in response to receiving a signal from the first switch and the second switch, deactivating the RFID reader by causing the RFID reader to enter a power saving mode.

In some embodiments, the method may include in response to receiving a signal from the first switch, the second switch, and the third switch, deactivating the RFID reader by causing the RFID reader to enter a power saving mode.

In some embodiments, each of the plurality of switches is configured to transmit a signal in response to being triggered for a first time period.

In some embodiments, each energy harvesting component comprises a piezoelectric sensor.

In accordance with another aspect of the disclosure, a computer program product is provided. In some embodiments, the computer program product includes at least one non-transitory computer-readable storage medium having computer program code stored thereon.

In some embodiments, the computer program code, in execution with at least one processor, configures the computer program product for receiving one or more signals from one or more of a plurality of switches. In some embodiments, each of the plurality of switches comprises an energy harvesting component and a switch controller. In some embodiments, each of the plurality of switches is configured to transmit a signal in response to being triggered. In some embodiments, a first switch of the plurality of switches is fixed to an ignition switch of a vehicle, a second switch of the plurality of switches is fixed to a brake pedal of the vehicle, and a third switch of the plurality of switches is fixed to an accelerator pedal of the vehicle. In some embodiments, the computer program code, in execution with at least one processor, configures the computer program product for causing a radio frequency identification (RFID) reader to be activated or deactivated based at least in part on the one or more signals received from one or more of the plurality of switches.

In some embodiments, the vehicle is an electric vehicle.

In some embodiments, the computer program code, in execution with at least one processor, configures the computer program product for in response to receiving a signal from the first switch and the second switch, activating the RFID reader by causing the RFID reader to enter an idle mode.

In some embodiments, the computer program code, in execution with at least one processor, configures the computer program product for in response to receiving a signal from the first switch, the second switch, and the third switch, activating the RFID reader by causing the RFID reader to enter an active mode.

In some embodiments, the computer program code, in execution with at least one processor, configures the computer program product for in response to receiving a signal from the first switch and the second switch, deactivating the RFID reader by causing the RFID reader to enter a power saving mode.

In some embodiments, the computer program code, in execution with at least one processor, configures the computer program product for in response to receiving a signal from the first switch, the second switch, and the third switch, deactivating the RFID reader by causing the RFID reader to enter a power saving mode.

In some embodiments, each of the plurality of switches is configured to transmit a signal in response to being triggered for a first time period.

In some embodiments, each energy harvesting component comprises a piezoelectric sensor.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the disclosure in any way. It will be appreciated that the scope of the present disclosure encompasses many potential embodiments in addition to those here summarized, some of which will be further described below.

### BRIEF DESCRIPTION OF THE DRAWINGS

Reference will now be made to the accompanying drawings. The components illustrated in the figures may or may not be present in certain embodiments described herein. Some embodiments may include fewer (or more) components than those shown in the figures in accordance with an example embodiment of the present disclosure.
FIG. 1 illustrates an environment in which one or more embodiments of the present disclosure may operate;
FIG. 2 illustrates a system in accordance with one or more embodiments of the present disclosure;
FIG. 3 illustrates a table in accordance with one or more embodiments of the present disclosure;
FIG. 4 illustrates another table in accordance with one or more embodiments of the present disclosure;
FIG. 5 illustrates a flowchart of an example method in accordance with one or more embodiments of the present disclosure; and
FIG. 6 illustrates a block diagram of an example computer processing device in accordance with one or more embodiments of the present disclosure.

### DETAILED DESCRIPTION

Example embodiments will be described more fully hereinafter with reference to the accompanying drawings, in which some, but not all embodiments of disclosure are shown. Indeed, embodiments of the disclosure may be embodied in many different forms and should not be construed as limited to the embodiments set forth herein; rather, these embodiments are provided so that this disclosure will satisfy applicable legal requirements. Like numbers refer to like elements throughout.

### Overview

Example embodiments disclosed herein address technical problems associated with systems, apparatuses, methods, and computer program products for activating or deactivating a radio frequency identification (RFID) reader. As would be understood by one skilled in the field to which this disclosure pertains, there are numerous example scenarios in which a user may use systems, apparatuses, methods, and computer program products for activating or deactivating a RFID reader.

In many applications, it is often desirable to activate or deactivate an RFID reader. For example, it may be desirable to activate or deactivate an RFID reader configured to scan and/or read RFID tags associated with packages in a vehicle (e.g., an electric delivery vehicle). In some examples, by scanning and/or reading RFID tags associated with packages in a vehicle it may be determined if the correct packages are on the vehicle (e.g., is the package supposed to be delivered by a particular vehicle). In some examples, it may be desirable to activate or deactivate an RFID reader to reduce battery consumption of the RFID reader. For example, it may be desirable to activate the RFID reader when the vehicle is on and operating (e.g., when the vehicle is delivering packages) and/or deactivate the RFID reader when the vehicle is off and not operating (e.g., when the vehicle is not delivering packages). In this way, in some examples, the RFID reader may be activated when it is desirable to use the RFID reader and deactivated when it is not desirable to use the RFID reader.

An example solution for activating or deactivating an RFID reader associated with a vehicle includes activating and/or deactivating the RFID reader by using the vehicles ignition as a trigger to identify when the vehicle is started and/or turned off. However, such an example solution is not practical when the vehicle is an electric vehicle because identifying when the vehicle is started and/or turned off requires interfacing with the electric vehicles electronic control unit, which may be time consuming and require customization for each different type of electric vehicle (e.g., different electric vehicles have different protocols and requirements for interacting with their electronic control unit). Another example solution for activating or deactivating an RFID reader associated with a vehicle includes activating and/or deactivating the RFID reader by using one or more accelerometers to identify when the vehicle is moving (e.g., when the vehicle is on and operating) and/or stopped (e.g., when the vehicle is off and not operating). However, such an example solution is not practical when the vehicle is an electric vehicle because electric vehicles are associated with minimal vibrations. As such, when using an accelerometer to identify when the vehicle is moving and/or stopped, the sensitivity of the accelerometer must be set such that there would be many false positives (e.g., vibrations caused by passing vehicles may cause a false positive).

Thus, to address these and/or other issues related to activating or deactivating a RFID reader, example systems, apparatuses, and/or methods for activating or deactivating a RFID reader are disclosed herein. For example, an embodiment in this disclosure, described in greater detail below, includes a system that includes a plurality of switches. In some embodiments, a first switch of the plurality of switches is fixed to an ignition switch of a vehicle, a second switch of the plurality of switches is fixed to a brake pedal of the vehicle, and a third switch of the plurality of switches is fixed to an accelerator pedal of the vehicle. In some embodiments, each of the plurality of switches comprises an energy harvesting component and a switch controller. In some embodiments, each of the plurality of switches is configured to transmit a signal in response to being triggered. In some embodiments, the system may include a RFID trigger circuitry. In some embodiments, the RFID trigger circuitry is configured to receive one or more signals from one or more of the plurality of switches. In some embodiments, the RFID trigger circuitry is configured to activate or deactivate a RFID reader based at least in part on the one or more signals received from one or more of the plurality of switches. Accordingly, the systems, apparatuses, methods, and computer program products described herein enable for the efficient and accurate activation and/or deactivation of RFID readers, such as RFID readers associated with electric vehicles.

### Example Systems and Apparatuses

Embodiments of the present disclosure herein include systems, apparatuses, methods, and computer program products for activating or deactivating a radio frequency identification (RFID) reader. It should be readily appreciated that the embodiments of the apparatus, systems, methods, and computer program product described herein may be configured in various additional and alternative manners in addition to those expressly described herein.

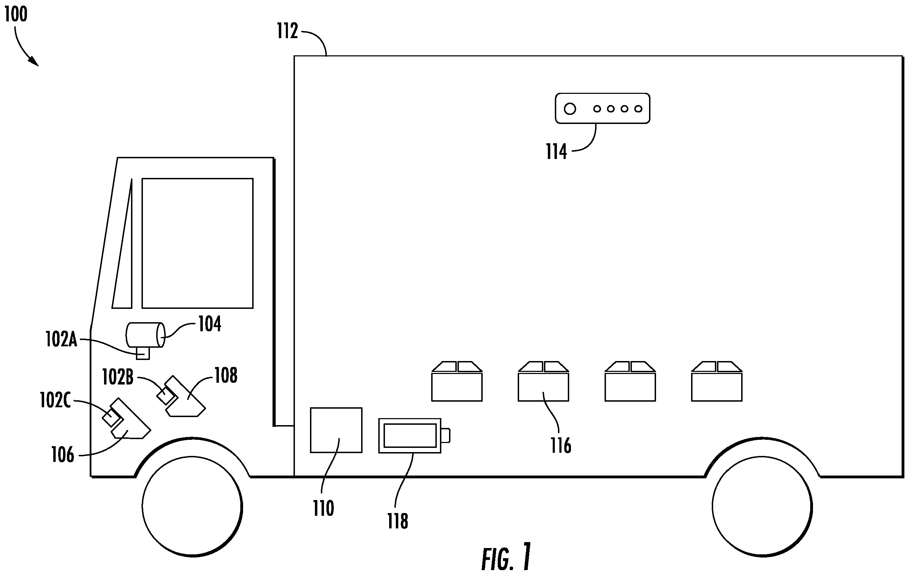

With reference to FIG. 1, an environment 100 in which embodiments of the present disclosure may operate is illustrated. In some embodiments, the environment 100 may include a vehicle 112. In some embodiments, the vehicle 112 may be an electric vehicle. For example, the vehicle 112 may be an electric delivery vehicle configured to transport one or more packages 116. In some embodiments, the vehicle 112 may include at least one battery 118. For example, if the vehicle is an electric vehicle, the at least one battery 118 may at least in part provide power for the vehicle 112.

In some embodiments, the vehicle 112 may include a RFID reader 114. In this regard, for example, the RFID reader 114 may be configured to scan and/or read RFID tags associated with at least some of the one or more packages 116. For example, the RFID reader 114 may be configured to scan and/or read a RFID tag associated with at least one of the one or more packages 116 to determine if the at least one package is supposed to be on the vehicle 112 (e.g., determine if the at least one of the one or more packages 116 should have already been delivered, determine if the at least one of the one or more packages 116 is supposed to be delivered by the vehicle 112, etc.).

In some embodiments, the vehicle 112 may include an ignition switch 104. For example, the ignition switch 104 may be configured to at least in part start the vehicle 112 and/or turn off the vehicle 112 when the ignition switch 104 is actuated. In some embodiments, the vehicle 112 may include a brake pedal 106. For example, the brake pedal 106 may be configured to at least in part decelerate the vehicle 112 when the brake pedal 106 is actuated. In some embodiments, the vehicle 112 may include an accelerator pedal 108. For example, the accelerator pedal 108 may be configured to at least in part accelerate the vehicle 112 when the accelerator pedal 108 is actuated.

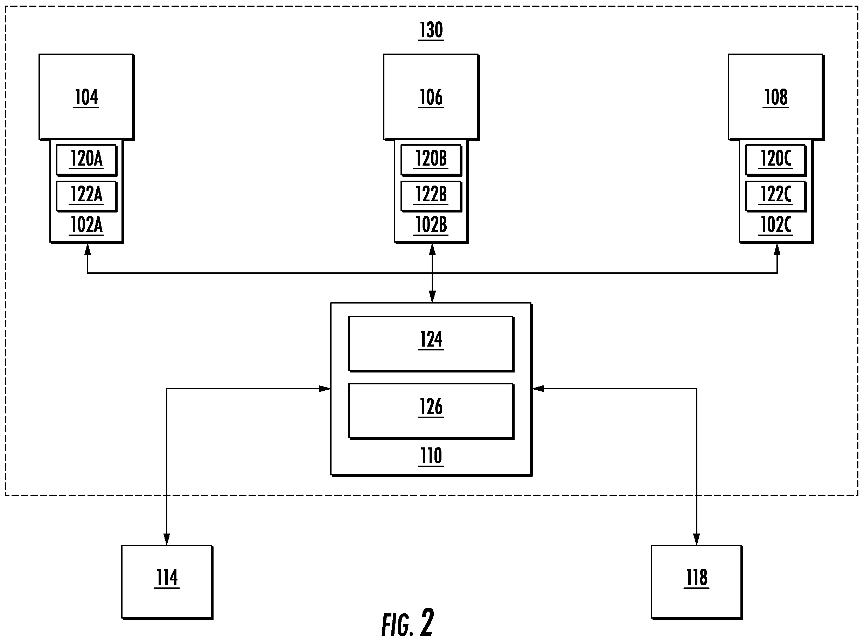

In some embodiments, the environment 100 may include a system 130. In some embodiments, such as illustrated in FIGS. 1 and 2, the system 130 may include a plurality of switches 102. For example, the plurality of switches 102 may include a first switch 102A, a second switch 102B, and/or a third switch 102C. In some embodiments, one or more of the plurality of switches 102 may be a BTPadSwitch.

In some embodiments, at least one of the plurality of switches 102 may be fixed to the ignition switch 104. For example, the first switch 102A may be fixed to the ignition switch 104 of the vehicle 112. In some embodiments, at least one of the plurality of switches 102 may be fixed to the brake pedal 106 of the vehicle 112. For example, the second switch 102B may be fixed to the brake pedal 106. In some embodiments, at least one of the plurality of switches 102 may be fixed to the accelerator pedal 108 of the vehicle 112. For example, the third switch 102C may be fixed to the accelerator pedal 108.

In some embodiments, the system 130 may include a plurality of energy harvesters 120 and/or a plurality of switch controllers 122. In this regard, each of the plurality of switches 102 may include at least one of the plurality of energy harvesters 120 and/or at least one of the plurality of switch controllers 122. For example, the first switch 102A may include a first energy harvester 120A and/or a first switch controller 122A, the second switch 102B may include a second energy harvester 120B and/or a second switch controller 122B, and the third switch 102C may include a third energy harvester 120C and/or a third switch controller 122C.

In some embodiments, each of the plurality of energy harvesters 120 may comprise one or more piezoelectric sensors. In this regard, for example, each of the plurality of energy harvesters 120 may be configured to generate energy when a mechanical stress is applied. For example, the first energy harvester 120A may be configured to generate energy when mechanical stress is applied to it. In this regard, at least in part because the first switch 102A may be fixed to the ignition switch 104, the first energy harvester 120A may be configured to generate energy when the ignition switch 104 is actuated (e.g., when the vehicle 112 is started and/or turned off). As another example, the second energy harvester 120B may be configured to generate energy when mechanical stress is applied to it. In this regard, at least in part because the second switch 102B may be fixed to the brake pedal 106, the second energy harvester 120B may be configured to generate energy when the brake pedal 106 is actuated (e.g., when the vehicle 112 is decelerated using the brake pedal 106). As another example, the third energy harvester 120C may be configured to generate energy when mechanical stress is applied to it. In this regard, at least in part because the third switch 102C may be fixed to the accelerator pedal 108, the third energy harvester 120C may be configured to generate energy when the accelerator pedal 108 is actuated (e.g., when the vehicle 112 is accelerated using the brake pedal 106).

In some embodiments, each of the plurality of energy harvesters 120 may be in communication with an associated switch controller of the plurality of switch controllers 122. For example, the first energy harvester 120A may be in communication with the first switch controller 122A. As another example, the second energy harvester 120B may be in communication with the second switch controller 122B. As another example, the third energy harvester 120C may be in communication with the third switch controller 122C. In this regard, for example, each of the plurality of energy harvesters 120 may be configured to provide energy to an associated switch controller of the plurality of switch controllers 122 such that the associated switch controller may operate. For example, the first energy harvester 120A may be configured to provide energy to the first switch controller 122A such that the first switch controller 122A may operate (e.g., energy harvested by the first energy harvester 120A at least in part due to actuation of the ignition switch 104). As another example, the second energy harvester 120B may be configured to provide energy to the second switch controller 122B such that the second switch controller 122B may operate (e.g., energy harvested by the second energy harvester 120B at least in part due to actuation of the brake pedal 106). As another example, the third energy harvester 120C may be configured to provide energy to the third switch controller 122C such that the third switch controller 122C may operate (e.g., energy harvested by the third energy harvester 120C at least in part due to actuation of the accelerator pedal 108).

In some embodiments, each of the plurality of switches 102 may be configured to transmit a signal. For example, a switch controller of one of the plurality of switches 102 may be configured to transmit a signal. In some embodiments, each of the plurality of switches 102 may be configured to transmit a signal in response to being triggered. In this regard, for example, a switch may be triggered when an associated energy harvester harvests energy due to having a mechanical stress applied and the energy is provided to an associated controller. Said differently, for example, the first switch 102A may transmit a first signal in response to being triggered when the ignition switch 104 is actuated. As another example, the second switch 102B may transmit a second signal in response to being triggered when the brake pedal 106 is actuated. As another example, the third switch 102C may transmit a third signal in response to being triggered when the accelerator pedal 108 is actuated.

In some embodiments, each of the plurality of switches 102 may be configured such that each of the plurality of switches 102 only transmits a signal when triggered for a first time period. In this regard, for example, each of the plurality of switches 102 may be configured such that each of the plurality of switches 102 only transmits a signal when an associated energy harvester has mechanical stress applied to it for the first time period. For example, the first switch 102A may be configured such that it only transmits a first signal in response to being triggered when the ignition switch 104 is actuated for the first time period. As another example, second switch 102B may be configured such that it only transmits a second signal in response to being triggered when the brake pedal 106 is actuated for the first time period. As another example, the third switch 102C may be configured such that it only transmits a third signal in response to being triggered when the accelerator pedal 108 is actuated for the first time period. In some embodiments, a length of the first time period may be based at least in part on the age of the vehicle 112. In some embodiments, the length of the first time period may be based at least on a vehicle type associated with the vehicle 112 (e.g., whether the vehicle 112 is a car, truck, and/or van, the vehicle brand, etc.) In some embodiments, the length of the first time period may between 250 milliseconds and 750 milliseconds. In some embodiments, by each of the plurality of switches 102 being configured such that each of the plurality of switches 102 only transmits a signal when triggered for the first time period, the system 130 may be configured such that signals are not transmitted when a switch of the plurality of switches 102 was triggered mistakenly and/or accidently (e.g., when the ignition switch 104, the brake pedal 106, and/or the accelerator pedal 108 was mistakenly actuated and/or accidently actuated).

In some embodiments, one or more of the plurality of switches 102, in response to being triggered, may be configured to transmit a Bluetooth signal (e.g., one or more of the plurality of switches 102 may be a Bluetooth enabled switch). In some embodiments, one or more of the plurality of switches 102, in response to being triggered, may be configured to transmit a Wi-Fi signal (e.g., one or more of the plurality of switches 102 may be a Wi-Fi enabled switch). In some embodiments, one or more of the plurality of switches 102, in response to being triggered, may be configured to transmit a cellular signal (e.g., one or more of the plurality of switches 102 may be a cellular enabled switch).

In some embodiments, the system 130 may include RFID trigger circuitry 110. In some embodiments the RFID trigger circuitry 110 may be configured to receive one or more signals from one or more of the plurality of switches 102. For example, the RFID trigger circuitry 110 may be configured to receive one or more signals from the first switch 102A, one or more signals from the second switch 102B, and/or one or more signals from the third switch 102C. In this regard, the RFID trigger circuitry 110 may include a receiving component 124 (e.g., the receiving component 124 of the RFID trigger circuitry 110 may be configured to receive the one or more signals from the plurality of switches 102). In some embodiments, the RFID trigger circuitry 110 may be configured to receive a Bluetooth signal (e.g., the RFID trigger circuitry 110 may be Bluetooth enabled). In some embodiments, the RFID trigger circuitry 110 may be configured to receive a Wi-Fi signal (e.g., the RFID trigger circuitry 110 may be Wi-Fi enabled). In some embodiments, the RFID trigger circuitry 110 may be configured to receive a cellular signal (e.g., the RFID trigger circuitry 110 may be cellular enabled).

In some embodiments, the RFID trigger circuitry 110 may include a RFID trigger circuitry controller 126. In some embodiments, in response to receiving one or more signals from the plurality of switches 102, the receiving component 124 may be configured to wake up the RFID trigger circuitry controller 126 from a power saving mode. In this regard, for example, the RFID trigger circuitry controller 126 may be configured such that, if the RFID trigger circuitry 110 does not receive one or more signals from one or more of the plurality of switches 102 for a predetermined amount of time, the RFID trigger circuitry controller 126 may enter into a power saving mode. In some embodiments, in the power saving mode, the RFID trigger circuitry controller 126 may be configured to consume less power than when it is not in the power saving mode (e.g., it may consume less power from the at least one battery 118 in the vehicle 112).

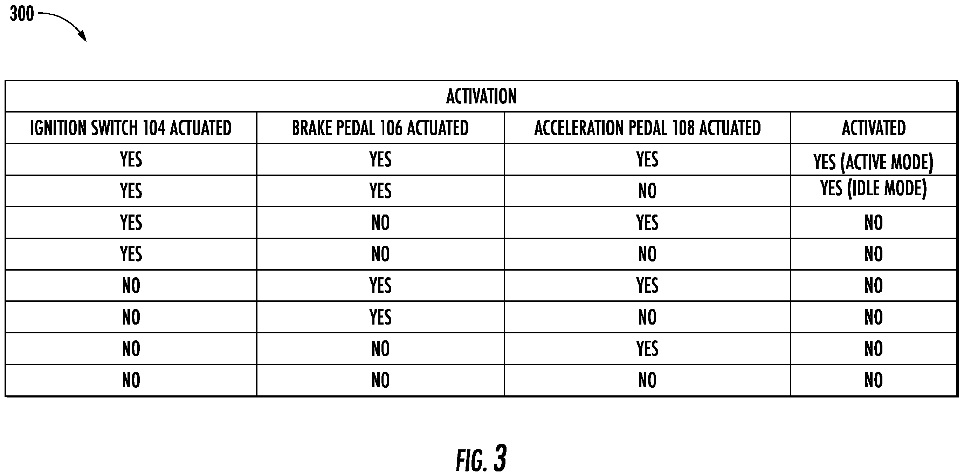

In some embodiments, in response to receiving a signal from the first switch 102A and the second switch 102B, the RFID trigger circuitry 110 (e.g., using the RFID trigger circuitry controller 126) may be configured to activate the RFID reader 114 by causing the RFID reader 114 to enter an idle mode. Said differently, the RFID trigger circuitry 110 may be configured to activate the RFID reader 114 by causing the RFID reader 114 to enter into an idle mode when the ignition switch 104 and the brake pedal 106 are actuated (e.g., as illustrated in table 300 of FIG. 3). In some embodiments, at least before receiving a signal from the first switch 102A and the second switch 102B, the vehicle 112 may have been off. For example, the RFID trigger circuitry controller 126 may have stored in memory that the vehicle was off.

In some embodiments, in response to receiving a signal from the first switch 102A, the second switch 102B, and the third switch 102C, the RFID trigger circuitry 110 (e.g., using the RFID trigger circuitry controller 126) may be configured to activate the RFID reader 114 by causing the RFID reader 114 to enter an active mode. Said differently, the RFID trigger circuitry 110 may be configured to activate the RFID reader 114 by causing the RFID reader 114 to enter into an active mode when the ignition switch 104, the brake pedal 106, and the accelerator pedal 108 are actuated (e.g., as illustrated in table 300 of FIG. 3). In some embodiments, at least before receiving a signal from the first switch 102A, the second switch 102B, and the third switch 102C, the vehicle 112 may have been off. For example, the RFID trigger circuitry controller 126 may have stored in memory that the vehicle was off.

In some embodiments, as illustrated in FIG. 3, in response to receiving signals from other combinations of the plurality of switches 102 (e.g., other than from the first switch 102A and the second switch 102B and/or the first switch 102A, the second switch 102B, and the third switch 102C), the RFID trigger circuitry 110 (e.g., using the RFID trigger circuitry controller 126) may not be configured to activate the RFID reader 114 (e.g., when the vehicle 112 is already on). For example, in response to receiving signals from the first switch 102A and the third switch 102C, but not from the second switch 102B, the RFID trigger circuitry 110 (e.g., using the RFID trigger circuitry controller 126) may not be configured to activate the RFID reader 114. Said differently, the RFID trigger circuitry 110 may not be configured to activate the RFID reader 114 when the ignition switch 104 and the accelerator pedal 108 are actuated, but the brake pedal 106 is not actuated (e.g., as illustrated in table 300 of FIG. 3).

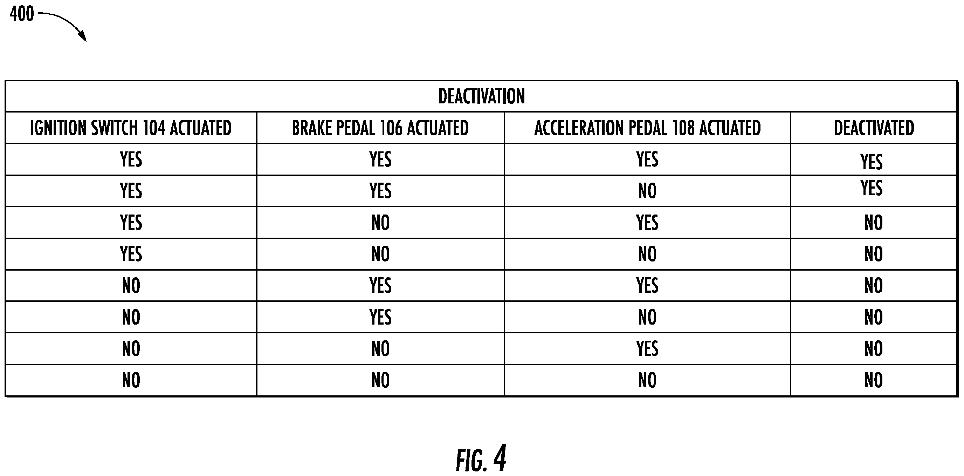

In some embodiments, in response to receiving a signal from the first switch 102A and the second switch 102B, the RFID trigger circuitry 110 (e.g., using the RFID trigger circuitry controller 126) may be configured to deactivate the RFID reader 114 by causing the RFID reader 114 to enter a power saving mode. Said differently, the RFID trigger circuitry 110 may be configured to deactivate the RFID reader 114 by causing the RFID reader 114 to enter into a power saving mode when the ignition switch 104 and the brake pedal 106 are actuated (e.g., as illustrated in table 400 of FIG. 4). In some embodiments, at least before receiving a signal from the first switch 102A and the second switch 102B, the vehicle 112 may have been on. For example, the RFID trigger circuitry controller 126 may have stored in memory that the vehicle was on.

In some embodiments, in response to receiving a signal from the first switch 102A, the second switch 102B, and the third switch 102C, the RFID trigger circuitry 110 (e.g., using the RFID trigger circuitry controller 126) may be configured to deactivate the RFID reader 114 by causing the RFID reader 114 to enter a power saving mode. Said differently, the RFID trigger circuitry 110 may be configured to deactivate the RFID reader 114 by causing the RFID reader 114 to enter into a power saving mode when the ignition switch 104, the brake pedal 106, and the accelerator pedal 108 are actuated (e.g., as illustrated in table 400 of FIG. 4). In some embodiments, at least before receiving a signal from the first switch 102A, the second switch 102B, and the third switch 102C, the vehicle 112 may have been on. For example, the RFID trigger circuitry controller 126 may have stored in memory that the vehicle was on.

In some embodiments, as illustrated in FIG. 4, in response to receiving signals from other combinations of the plurality of switches 102 (e.g., other than from the first switch 102A and the second switch 102B and/or the first switch 102A, the second switch 102B, and the third switch 102C), the RFID trigger circuitry 110 (e.g., using the RFID trigger circuitry controller 126) may not be configured to deactivate the RFID reader 114 (e.g., when the vehicle 112 is already on). For example, in response to receiving signals from the first switch 102A and the third switch 102C, but not from the second switch 102B, the RFID trigger circuitry 110 (e.g., using the RFID trigger circuitry controller 126) may not be configured to deactivate the RFID reader 114. Said differently, the RFID trigger circuitry 110 may not be configured to deactivate the RFID reader 114 when the ignition switch 104 and the accelerator pedal 108 are actuated, but the brake pedal 106 is not actuated (e.g., as illustrated in table 400 of FIG. 4).

In some embodiments, when in the idle mode, the RFID reader 114 may be associated with a first power consumption rate. For example, the first power rate consumption may be between 0.5 watts and 2.0 watts. In some embodiments, when in the active mode, the RFID reader 114 may be associated with a second power consumption rate. For example, the second power rate consumption may be between 12 watts and 20 watts. In some embodiments, when in the power saving mode, the RFID reader 114 may be associated with a third power consumption rate. For example, the third power consumption rate may be less than 0.25 watts.

### Example Methods

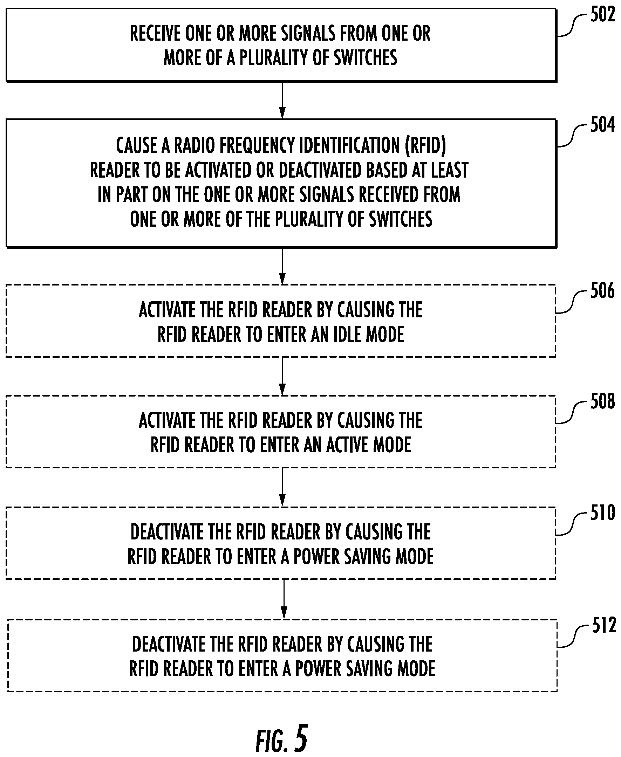

Referring now to FIG. 5, a flowchart providing an example method 500 is illustrated. In this regard, FIG. 5 illustrates operations that may be performed by the system 130 and/or components of the system 130.

As shown in block 502, the method 500 may include receiving one or more signals from one or more of a plurality of switches. As described above, for example, the plurality of switches may include a first switch, a second switch, and/or a third switch. In some embodiments, one or more of the plurality of switches may be a BTPadSwitch.

As shown in block 504, the method 500 may include causing a radio frequency identification (RFID) reader to be activated or deactivated based at least in part on the one or more signals received from one or more of the plurality of switches. As described above, in some embodiments, an RFID reader may be configured to scan and/or read RFID tags associated with at least some of one or more packages in a vehicle (e.g., an electric vehicle). For example, the RFID reader may be configured to scan and/or read a RFID tag associated with at least one of the one or more packages to determine if the at least one package is supposed to be on a vehicle (e.g., determine if the at least one of the one or more packages should have already been delivered, determine if the at least one of the one or more packages is supposed to be delivered by the vehicle, etc.).

In some embodiments, the vehicle may include an ignition switch. For example, the ignition switch may be configured to at least in part start the vehicle and/or turn off the vehicle when the ignition switch is actuated. In some embodiments, the vehicle may include a brake pedal. For example, the brake pedal may be configured to at least in part decelerate the vehicle when the brake pedal is actuated. In some embodiments, the vehicle may include an accelerator pedal. For example, the accelerator pedal may be configured to at least in part accelerate the vehicle when the accelerator pedal is actuated.

In some embodiments, at least one of the plurality of switches may be fixed to the ignition switch. For example, the first switch may be fixed to the ignition switch of the vehicle. In some embodiments, at least one of the plurality of switches may be fixed to the brake pedal of the vehicle. For example, the second switch may be fixed to the brake pedal. In some embodiments, at least one of the plurality of switches may be fixed to the accelerator pedal of the vehicle. For example, the third switch may be fixed to the accelerator pedal.

In some embodiments, each of the plurality of switches may include at least one of a plurality of energy harvesters and/or at least one of a plurality of switch controllers. For example, the first switch may include a first energy harvester and/or a first switch controller, the second switch may include a second energy harvester and/or a second switch controller, and the third switch may include a third energy harvester and/or a third switch controller.

In some embodiments, each of the plurality of energy harvesters may comprise one or more piezoelectric sensors. In this regard, for example, each of the plurality of energy harvesters may be configured to generate energy when a mechanical stress is applied. For example, the first energy harvester may be configured to generate energy when mechanical stress is applied to it. In this regard, at least in part because the first switch may be fixed to the ignition switch, the first energy harvester may be configured to generate energy when the ignition switch is actuated (e.g., when the vehicle is started and/or turned off). As another example, the second energy harvester may be configured to generate energy when mechanical stress is applied to it. In this regard, at least in part because the second switch may be fixed to the brake pedal, the second energy harvester may be configured to generate energy when the brake pedal is actuated (e.g., when the vehicle is decelerated using the brake pedal). As another example, the third energy harvester may be configured to generate energy when mechanical stress is applied to it. In this regard, at least in part because the third switch may be fixed to the accelerator pedal, the third energy harvester may be configured to generate energy when the accelerator pedal is actuated (e.g., when the vehicle is accelerated using the brake pedal).

In some embodiments, each of the plurality of energy harvesters may be in communication with an associated switch controller of the plurality of switch controllers. For example, the first energy harvester may be in communication with the first switch controller. As another example, the second energy harvester may be in communication with the second switch controller. As another example, the third energy harvester may be in communication with the third switch controller. In this regard, for example, each of the plurality of energy harvesters may be configured to provide energy to an associated switch controller of the plurality of switch controllers such that the associated switch controller may operate. For example, the first energy harvester may be configured to provide energy to the first switch controller such that the first switch controller may operate (e.g., energy harvested by the first energy harvester at least in part due to actuation of the ignition switch). As another example, the second energy harvester may be configured to provide energy to the second switch controller such that the second switch controller may operate (e.g., energy harvested by the second energy harvester at least in part due to actuation of the brake pedal). As another example, the third energy harvester may be configured to provide energy to the third switch controller such that the third switch controller may operate (e.g., energy harvested by the third energy harvester at least in part due to actuation of the accelerator pedal).

In some embodiments, each of the plurality of switches may be configured to transmit a signal. For example, a switch controller of one of the plurality of switches may be configured to transmit a signal. In some embodiments, each of the plurality of switches may be configured to transmit a signal in response to being triggered. In this regard, for example, a switch may be triggered when an associated energy harvester harvests energy due to having a mechanical stress applied and the energy is provided to an associated controller. Said differently, for example, the first switch may transmit a first signal in response to being triggered when the ignition switch is actuated. As another example, the second switch may transmit a second signal in response to being triggered when the brake pedal is actuated. As another example, the third switch may transmit a third signal in response to being triggered when the accelerator pedal is actuated.

In some embodiments, each of the plurality of switches may be configured such that each of the plurality of switches only transmits a signal when triggered for a first time period. In this regard, for example, each of the plurality of switches may be configured such that each of the plurality of switches only transmits a signal when an associated energy harvester has mechanical stress applied to it for the first time period. For example, the first switch may be configured such that it only transmits a first signal in response to being triggered when the ignition switch is actuated for the first time period. As another example, second switch may be configured such that it only transmits a second signal in response to being triggered when the brake pedal is actuated for the first time period. As another example, the third switch may be configured such that it only transmits a third signal in response to being triggered when the accelerator pedal is actuated for the first time period. In some embodiments, a length of the first time period may be based at least in part on the age of the vehicle. In some embodiments, the length of the first time period may be based at least on a vehicle type associated with the vehicle (e.g., whether the vehicle is a car, truck, and/or van, the vehicle brand, etc.) In some embodiments, the length of the first time period may between 250 milliseconds and 750 milliseconds. In some embodiments, by each of the plurality of switches being configured such that each of the plurality of switches only transmits a signal when triggered for the first time period, signals are not transmitted when a switch of the plurality of switches was triggered mistakenly and/or accidently (e.g., when the ignition switch, the brake pedal, and/or the accelerator pedal was mistakenly actuated and/or accidently actuated).

In some embodiments, one or more of the plurality of switches, in response to being triggered, may be configured to transmit a Bluetooth signal (e.g., one or more of the plurality of switches may be a Bluetooth enabled switch). In some embodiments, one or more of the plurality of switches, in response to being triggered, may be configured to transmit a Wi-Fi signal (e.g., one or more of the plurality of switches may be a Wi-Fi enabled switch). In some embodiments, one or more of the plurality of switches, in response to being triggered, may be configured to transmit a cellular signal (e.g., one or more of the plurality of switches may be a cellular enabled switch).

In some embodiments RFID trigger circuitry may be configured to receive one or more signals from one or more of the plurality of switches. For example, the RFID trigger circuitry may be configured to receive one or more signals from the first switch, one or more signals from the second switch, and/or one or more signals from the third switch. In this regard, the RFID trigger circuitry may include a receiving component (e.g., the receiving component of the RFID trigger circuitry may be configured to receive the one or more signals from the plurality of switches). In some embodiments, the RFID trigger circuitry may be configured to receive a Bluetooth signal (e.g., the RFID trigger circuitry may be Bluetooth enabled). In some embodiments, the RFID trigger circuitry may be configured to receive a Wi-Fi signal (e.g., the RFID trigger circuitry may be Wi-Fi enabled). In some embodiments, the RFID trigger circuitry may be configured to receive a cellular signal (e.g., the RFID trigger circuitry may be cellular enabled).

In some embodiments, the RFID trigger circuitry may include a RFID trigger circuitry controller. In some embodiments, in response to receiving one or more signals from the plurality of switches, the receiving component may be configured to wake up the RFID trigger circuitry controller from a power saving mode. In this regard, for example, the RFID trigger circuitry controller may be configured such that, if the RFID trigger circuitry does not receive one or more signals from one or more of the plurality of switches for a predetermined amount of time, the RFID trigger circuitry controller may enter into a power saving mode. In some embodiments, in the power saving mode, the RFID trigger circuitry controller may be configured to consume less power than when it is not in the power saving mode (e.g., it may consume less power from at least one battery in the vehicle).

As shown in block 506, the method 500 may optionally include in response to receiving a signal from the first switch and the second switch, activating the RFID reader by causing the RFID reader to enter an idle mode. As described above, in some embodiments, in response to receiving a signal from the first switch and the second switch, the RFID trigger circuitry (e.g., using the RFID trigger circuitry controller) may be configured to activate the RFID reader by causing the RFID reader to enter an idle mode. Said differently, the RFID trigger circuitry may be configured to activate the RFID reader by causing the RFID reader to enter into an idle mode when the ignition switch and the brake pedal are actuated. In some embodiments, at least before receiving a signal from the first switch and the second switch, the vehicle may have been off. For example, the RFID trigger circuitry controller may have stored in memory that the vehicle was off.

As shown in block 508, the method 500 may optionally include in response to receiving a signal from the first switch, the second switch, and the third switch, activating the RFID reader by causing the RFID reader to enter an active mode. As described above, in some embodiments, in response to receiving a signal from the first switch, the second switch, and the third switch, the RFID trigger circuitry (e.g., using the RFID trigger circuitry controller) may be configured to activate the RFID reader by causing the RFID reader to enter an active mode. Said differently, the RFID trigger circuitry may be configured to activate the RFID reader by causing the RFID reader to enter into an active mode when the ignition switch, the brake pedal, and the accelerator pedal are actuated. In some embodiments, at least before receiving a signal from the first switch, the second switch, and the third switch, the vehicle may have been off. For example, the RFID trigger circuitry controller may have stored in memory that the vehicle was off.

In some embodiments, in response to receiving signals from other combinations of the plurality of switches (e.g., other than from the first switch and the second switch and/or the first switch, the second switch, and the third switch), the RFID trigger circuitry (e.g., using the RFID trigger circuitry controller) may not be configured to activate the RFID reader (e.g., when the vehicle is already on). For example, in response to receiving signals from the first switch and the third switch, but not from the second switch, the RFID trigger circuitry (e.g., using the RFID trigger circuitry controller) may not be configured to activate the RFID reader. Said differently, the RFID trigger circuitry may not be configured to activate the RFID reader when the ignition switch and the accelerator pedal are actuated, but the brake pedal is not actuated.

As shown in block 510, the method 500 may optionally include in response to receiving a signal from the first switch and the second switch, deactivating the RFID reader by causing the RFID reader to enter a power saving mode. As described above, in some embodiments, in response to receiving a signal from the first switch and the second switch, the RFID trigger circuitry (e.g., using the RFID trigger circuitry controller) may be configured to deactivate the RFID reader by causing the RFID reader to enter a power saving mode. Said differently, the RFID trigger circuitry may be configured to deactivate the RFID reader by causing the RFID reader to enter into a power saving mode when the ignition switch and the brake pedal are actuated. In some embodiments, at least before receiving a signal from the first switch and the second switch, the vehicle may have been on. For example, the RFID trigger circuitry controller may have stored in memory that the vehicle was on.

As shown in block 512, the method 500 may optionally include in response to receiving a signal from the first switch, the second switch, and the third switch, deactivating the RFID reader by causing the RFID reader to enter a power saving mode. As described above, in some embodiments, in response to receiving a signal from the first switch, the second switch, and the third switch, the RFID trigger circuitry (e.g., using the RFID trigger circuitry controller) may be configured to deactivate the RFID reader by causing the RFID reader to enter a power saving mode. Said differently, the RFID trigger circuitry may be configured to deactivate the RFID reader by causing the RFID reader to enter into a power saving mode when the ignition switch, the brake pedal, and the accelerator pedal are actuated. In some embodiments, at least before receiving a signal from the first switch, the second switch, and the third switch, the vehicle may have been on. For example, the RFID trigger circuitry controller may have stored in memory that the vehicle was on.

In some embodiments, in response to receiving signals from other combinations of the plurality of switches (e.g., other than from the first switch and the second switch and/or the first switch, the second switch, and the third switch), the RFID trigger circuitry (e.g., using the RFID trigger circuitry controller) may not be configured to deactivate the RFID reader (e.g., when the vehicle is already on). For example, in response to receiving signals from the first switch and the third switch, but not from the second switch, the RFID trigger circuitry (e.g., using the RFID trigger circuitry controller) may not be configured to deactivate the RFID reader. Said differently, the RFID trigger circuitry may not be configured to deactivate the RFID reader when the ignition switch and the accelerator pedal are actuated, but the brake pedal is not actuated.

In some embodiments, when in the idle mode, the RFID reader may be associated with a first power consumption rate. For example, the first power rate consumption may be between 0.5 watts and 2.0 watts. In some embodiments, when in the active mode, the RFID reader may be associated with a second power consumption rate. For example, the second power rate consumption may be between 12 watts and 20 watts. In some embodiments, when in the power saving mode, the RFID reader may be associated with a third power consumption rate. For example, the third power consumption rate may be less than 0.25 watts.

### Example Computer Processing Device

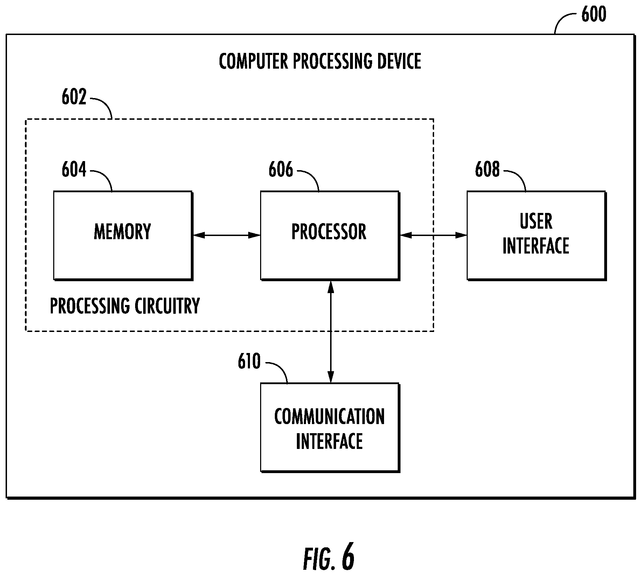

With reference to FIG 6, a block diagram of an example computer processing device 600 is illustrated in accordance with some example embodiments. In some embodiments, the plurality of switch controllers 122, the RFID trigger circuitry controller 126, the RFID reader 114, and/or other devices may be embodied as one or more computer processing devices, such as the computer processing device 600 in FIG. 6. However, it should be noted that the components, devices, or elements illustrated in and described with respect to FIG. 6 below may not be mandatory and thus one or more may be omitted in certain embodiments. Additionally, some embodiments may include further or different components, devices or elements beyond those illustrated in and described with respect to FIG. 6.

The computer processing device 600 may include or otherwise be in communication with processing circuitry 602 that is configurable to perform actions in accordance with one or more embodiments disclosed herein. In this regard, the processing circuitry 602 may be configured to perform and/or control performance of one or more functionalities of the computer processing device 600 in accordance with various embodiments, and thus may provide means for performing functionalities of the computer processing device 600 in accordance with various embodiments. The processing circuitry 602 may be configured to perform data processing, application execution and/or other processing and management services according to one or more embodiments. In some embodiments, the computer processing device 600 or a portion(s) or component(s) thereof, such as the processing circuitry 602, may be embodied as or comprise a chip or chip set. In other words, the computer processing device 600 or the processing circuitry 602 may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The computer processing device 600 or the processing circuitry 602 may therefore, in some cases, be configured to implement an embodiment of the disclosure on a single chip or as a single "system on a chip." As such, in some cases, a chip or chipset may constitute means for performing one or more operations for providing the functionalities described herein.

In some embodiments, the processing circuitry 602 may include a processor 606 and, in some embodiments, such as that illustrated in FIG. 6, may further include memory 604. The processing circuitry 602 may be in communication with or otherwise control a user interface 608 and/or a communication interface 610. As such, the processing circuitry 602 may be embodied as a circuit chip (e.g., an integrated circuit chip) configured (e.g., with hardware, software or a combination of hardware and software) to perform operations described herein.

The processor 606 may be embodied in a number of different ways. For example, the processor 606 may be embodied as various processing means such as one or more of a microprocessor or other processing element, a coprocessor, a controller or various other computing or processing devices including integrated circuits such as, for example, an ASIC (application specific integrated circuit), an FPGA (field programmable gate array), or the like. Although illustrated as a single processor, it will be appreciated that the processor 606 may comprise a plurality of processors. The plurality of processors may be in operative communication with each other and may be collectively configured to perform one or more functionalities of the computer processing device 600 as described herein. In some embodiments, the processor 606 may be configured to execute instructions stored in the memory 604 or otherwise accessible to the processor 606. As such, whether configured by hardware or by a combination of hardware and software, the processor 606 may represent an entity (e.g., physically embodied in circuitry - in the form of processing circuitry 602) capable of performing operations according to embodiments of the present disclosure while configured accordingly. Thus, for example, when the processor 606 is embodied as an ASIC, FPGA or the like, the processor 606 may be specifically configured hardware for conducting the operations described herein. Alternatively, as another example, when the processor 606 is embodied as an executor of software instructions, the instructions may specifically configure the processor 606 to perform one or more operations described herein.

In some embodiments, the memory 604 may include one or more non-transitory memory devices such as, for example, volatile and/or non-volatile memory that may be either fixed or removable. In this regard, the memory 604 may comprise a non-transitory computer-readable storage medium. It will be appreciated that while the memory 604 is illustrated as a single memory, the memory 604 may comprise a plurality of memories. The memory 604 may be configured to store information, data, applications, instructions and/or the like for enabling the computer processing device 600 to carry out various functions in accordance with one or more embodiments. For example, the memory 604 may be configured to buffer input data for processing by the processor 606. Additionally or alternatively, the memory 604 may be configured to store instructions for execution by the processor 606. As yet another alternative, the memory 604 may include one or more databases that may store a variety of files, contents or data sets. Among the contents of the memory 604, applications may be stored for execution by the processor 606 in order to carry out the functionality associated with each respective application. In some cases, the memory 604 may be in communication with one or more of the processor 606, user interface 608, and/or communication interface 610 via a bus(es) for passing information among components of the computer processing device 600.

The user interface 608 may be in communication with the processing circuitry 602 to receive an indication of a user input at the user interface 608 and/or to provide an audible, visual, mechanical or other output to the user. As such, the user interface 608 may include, for example, a keyboard, a mouse, a joystick, a display, a touch screen display, a microphone, a speaker, and/or other input/output mechanisms. As such, the user interface 608 may, in some embodiments, provide means for a user to access and interact with the system 130, the plurality of switch controllers 122, the RFID trigger circuitry controller 126, the RFID reader 114, and/or other devices.

The communication interface 610 may include one or more interface mechanisms for enabling communication with other devices and/or networks. In some cases, the communication interface 610 may be any means such as a device or circuitry embodied in either hardware, or a combination of hardware and software that is configured to receive and/or transmit data from/to a network and/or any other device or module in communication with the processing circuitry 602. By way of example, the communication interface 610 may be configured to enable the RFID trigger circuitry controller 126 to communicate with the RFID reader 114. Accordingly, the communication interface 610 may, for example, include an antenna (or multiple antennas) and supporting hardware and/or software for enabling communications with a wireless communication network (e.g., a wireless local area network, cellular network, global positing system network, and/or the like) and/or a communication modem or other hardware/software for supporting communication via cable, digital subscriber line (DSL), universal serial bus (USB), Ethernet or other methods.

Many modifications and other embodiments of the inventions set forth herein will come to mind to one skilled in the art to which these inventions pertain having the benefit of teachings presented in the foregoing descriptions and the associated drawings. Although the figures only show certain components of the apparatus and systems described herein, it is understood that various other components may be used in conjunction with the system. Therefore, it is to be understood that the inventions are not to be limited to the specific embodiments disclosed and that modifications and other embodiments are intended to be included within the scope of the appended claims. Moreover, the steps in the method described above may not necessarily occur in the order depicted in the accompanying diagrams, and in some cases one or more of the steps depicted may occur substantially simultaneously, or additional steps may be involved. Although specific terms are employed herein, they are used in a generic and descriptive sense only and not for purposes of limitation.

While various embodiments in accordance with the principles disclosed herein have been shown and described above, modifications thereof may be made by one skilled in the art without departing from the spirit and the teachings of the disclosure. The embodiments described herein are representative only and are not intended to be limiting. Many variations, combinations, and modifications are possible and are within the scope of the disclosure. Alternative embodiments that result from combining, integrating, and/or omitting features of the embodiment(s) are also within the scope of the disclosure. Accordingly, the scope of protection is not limited by the description set out above.

Additionally, the section headings used herein are provided for consistency with the suggestions under 37 C.F.R. 1.77 or to otherwise provide organizational cues. These headings shall not limit or characterize the invention(s) set out in any claims that may issue from this disclosure.

Use of broader terms such as "comprises," "includes," and "having" should be understood to provide support for narrower terms such as "consisting of," "consisting essentially of," and "comprised substantially of' Use of the terms "optionally," "may," "might," "possibly," and the like with respect to any element of an embodiment means that the element is not required, or alternatively, the element is required, both alternatives being within the scope of the embodiment(s). Also, references to examples are merely provided for illustrative purposes, and are not intended to be exclusive.

## Claims

1. A system comprising:
a plurality of switches, wherein each of the plurality of switches comprises an energy harvesting component and a switch controller, wherein each of the plurality of switches is configured to transmit a signal in response to being triggered, wherein a first switch of the plurality of switches is fixed to an ignition switch of a vehicle, a second switch of the plurality of switches is fixed to a brake pedal of the vehicle, and a third switch of the plurality of switches is fixed to an accelerator pedal of the vehicle; and
radio frequency identification (RFID) trigger circuitry, wherein the RFID trigger circuitry is configured to receive one or more signals from one or more of the plurality of switches, wherein the RFID trigger circuitry is configured to activate or deactivate a RFID reader based at least in part on the one or more signals received from one or more of the plurality of switches.

2. The system of claim 1, wherein the vehicle is an electric vehicle.

3. The system of claim 1, wherein the RFID trigger circuitry comprises a receiving component and a RFID trigger circuitry controller.

4. The system of claim 3, wherein the receiving component is configured to receive one or more signals from one or more of the plurality of switches, wherein, in response to receiving one or more signals from the plurality of switches, the receiving component is configured to wake up the RFID trigger circuitry controller from a power saving mode.

5. The system of claim 1, wherein, in response to receiving a signal from the first switch and the second switch, the RFID trigger circuitry is configured to activate the RFID reader by causing the RFID reader to enter an idle mode.

6. The system of claim 1, wherein, in response to receiving a signal from the first switch, the second switch, and the third switch, the RFID trigger circuitry is configured to activate the RFID reader by causing the RFID reader to enter an active mode.

7. The system of claim 1, wherein, in response to receiving a signal from the first switch and the second switch, the RFID trigger circuitry is configured to deactivate the RFID reader by causing the RFID reader to enter a power saving mode.

8. The system of claim 1, wherein, in response to receiving a signal from the first switch, the second switch, and the third switch, the RFID trigger circuitry is configured to deactivate the RFID reader by causing the RFID reader to enter a power saving mode.

9. The system of claim 1, wherein each of the plurality of switches is configured to transmit a signal in response to being triggered for a first time period.

10. The system of claim 1, wherein each energy harvesting component comprises a piezoelectric sensor.

11. A method comprising:
receiving one or more signals from one or more of a plurality of switches,
wherein each of the plurality of switches comprises an energy harvesting component and a switch controller, wherein each of the plurality of switches is configured to transmit a signal in response to being triggered, wherein a first switch of the plurality of switches is fixed to an ignition switch of a vehicle, a second switch of the plurality of switches is fixed to a brake pedal of the vehicle, and a third switch of the plurality of switches is fixed to an accelerator pedal of the vehicle; and
causing a radio frequency identification (RFID) reader to be activated or deactivated based at least in part on the one or more signals received from one or more of the plurality of switches.

12. The method of claim 11, wherein the vehicle is an electric vehicle.

13. The method of claim 11, further comprising:
in response to receiving a signal from the first switch and the second switch, activating the RFID reader by causing the RFID reader to enter an idle mode.

14. The method of claim 11, further comprising:
in response to receiving a signal from the first switch, the second switch, and the third switch, activating the RFID reader by causing the RFID reader to enter an active mode.

15. A computer program product comprising at least one non-transitory computer-readable storage medium having computer program code stored thereon that, in execution with at least one processor, configures the computer program product for:
receiving one or more signals from one or more of a plurality of switches,
wherein each of the plurality of switches comprises an energy harvesting component and a switch controller, wherein each of the plurality of switches is configured to transmit a signal in response to being triggered, wherein a first switch of the plurality of switches is fixed to an ignition switch of a vehicle, a second switch of the plurality of switches is fixed to a brake pedal of the vehicle, and a third switch of the plurality of switches is fixed to an accelerator pedal of the vehicle; and
causing a radio frequency identification (RFID) reader to be activated or deactivated based at least in part on the one or more signals received from one or more of the plurality of switches.
